# DEMANDE DE BREVET EUROPEEN

(11) **EP 2 202 114 A1**
(43) Date de publication de la demande: **30.06.2010**
(21) Numéro de dépôt: 09178729.1
(22) Date de dépôt: 10.12.2009
(51) Int. Cl.: B60N 2/02

(54) **Dispositif de déverrouillage du nez d'une assise d'un siège de véhicule automobile**

(30) Priorité: 19.12.2008 FR 0858851
(71) Demandeur: Peugeot Citroën Automobiles SA, 78140 Vélizy Villacoublay (FR)
(72) Inventeur: Gomes, Antonio, 78560 Le Port Marly (FR)

(57) **Abrégé**

Siège de véhicule (1) automobile comprenant :
• un dossier (5),
• un coussin d'assise (4),
• une structure de nez d'assise(3), pouvant être déployée de façon réversible vers l'avant du coussin d'assise (4) et
• un moyen de commande assurant le déverrouillage du nez d'assise (3),

**caractérisé en ce que** le moyen de commande (2) comprend un moyen d'appui (13) et un élément filaire souple (14) disposés le long l'un de l'autre et espacés l'un de l'autre de manière à ce que, lorsque la paume d'une main d'un utilisateur est en appui sur le moyen d'appui (13), ses doigts puissent exercer une traction sur l'élément filaire souple (14) en le tirant vers le moyen d'appui afin de déverrouiller le nez d'assise (3).

## Description

La présente invention concerne un dispositif de déverrouillage du nez de l'assise d'un siège de véhicule automobile, permettent de réaliser un réglage suivant d'une position escamotée à une position déployée à la convenance de son utilisateur.

Afin d'améliorer le confort des utilisateurs, certains sièges de véhicule automobile et notamment les assises de sièges comportent des nez d'assise réglable. Ces nez d'assise réglable longitudinalement à la demande procurent une meilleure assise.

Suivant l'état de la technique connu par le brevet FR2885565, ces nez d'assise sont pour la plupart des cas déplacés manuellement et s'avèrent peu pratique pour obtenir un réglage satisfaisant.

L'invention a notamment pour but d'éviter les inconvénients de l'art antérieur et de fournir un moyen de commande simple et peu onéreux.

A cet effet, l'invention concerne un siège de véhicule automobile qui comprend:
- un dossier,
- un coussin d'assise,
- une structure de nez d'assise, pouvant être déployée de façon réversible vers l'avant du coussin d'assise et
- un moyen de commande assurant le déverrouillage du nez d'assise, et en ce que le moyen de commande comprend un moyen d'appui et un élément filaire souple disposés le long l'un de l'autre et espacés l'un de l'autre de manière à ce que, lorsque la paume d'une main d'utilisateur est en appui sur le moyen d'appui, ses doigts puissent exercer une traction sur l'élément filaire souple en le tirant vers le moyen d'appui afin de déverrouiller le nez de coussin.

Avantageusement, le siège de véhicule automobile comprend un moyen de déplacement apte à déployer automatiquement le nez d'assise dès que celui-ci est déverrouillé, afin que l'utilisateur soit rapidement dans une position idéale.

Suivant un mode préféré de l'invention le moyen de déplacement est un vérin à simple effet, de fonctionnement fiable.

Suivant un autre mode préféré de l'invention le moyen d'appui comprend une barre, ainsi la barre est un profilé.

Avantageusement, le moyen d'appui présente une forme en U et comprend, aux extrémités de la barre, deux prolongements sensiblement perpendiculaires à la barre, et en ce que l'une des extrémités de l'élément filaire est fixée solidairement à un des prolongements et l'autre extrémité de l'élément filaire est reliée au moyen de déplacement, ainsi la barre est facile à conformer.

Avantageusement, l'élément filaire souple est un câble, peu onéreux.

Avantageusement, le câble est constitué de fils torsadés ou tressés, ainsi le câble est résistant.

Avantageusement, l'élément filaire souple est recouvert d'une gaine plastifiée, ainsi la gaine est plus agréable au toucher.

Suivant une caractéristique, l'élément filaire souple est tendu lorsqu'il n'est pas actionné, ainsi il est toujours en position idéale.

Avantageusement, le nez de coussin est escamotable par une poussée manuelle sur le moyen d'appui vers l'arrière du siège, après déverrouillage du moyen de déplacement, ainsi l'effort à exercer pour l'utilisateur est réduit.

Selon une caractéristique avantageuse, le moyen et d'appui et l'élément filaire sont disposés sous la structure de nez de cousin mobile, le moyen d'appui étant disposé plus vers l'avant du siège que l'élément filaire, ainsi les moyens de commande sont discrets et facile à actionner.

D'autres caractéristiques d'un dispositif de déverrouillage du nez de l'assise d'un siège conforme à l'invention, apparaîtront encore à travers la description qui suit d'exemples de réalisation, donnés à titre indicatif et non limitatif, en référence aux dessins annexés sur lesquels :
- La Figure 1 est une vue schématique en vue de profil d'un siège de véhicule automobile équipé d'un dispositif de déverrouillage du nez d'assise suivant l'invention,
- La Figure 2 est une vue de dessous partielle d'un dispositif de déverrouillage du nez d'assise d'un siège suivant l'invention,
- La Figure 3 est une vue schématique en perspective de la structure d'un dispositif de déverrouillage d'un nez d'assise d'un siège suivant l'invention.

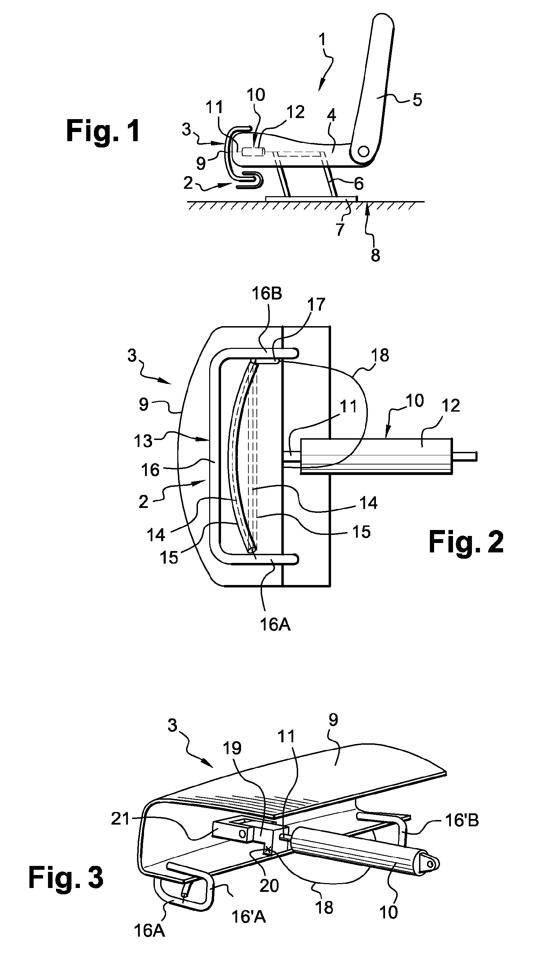

La figure 1 représente très schématiquement un siège 1 de véhicule automobile équipé d'un dispositif de déverrouillage 2 du nez d'assise 3, le siège 1 est constitué d'une assise 4 et d'un dossier 5. Pour une meilleure compréhension, l'assise 4 du siège et la structure 9 de nez sont représentés sans garnissage. Le siège 1 comprend une structure de support 6 assemblé sur l'assise et coulissant dans des glissières 7 fixées sur le plancher 8 du véhicule. Sur la figure, on voit la structure 9 du nez d'assise 3, le nez de l'assise 3 est déplaçable longitudinalement vers l'avant de l'assise 4 du siège 1 à l'aide d'un vérin simple effet 10 dont une extrémité de la tige du piston 11 est fixé sur la structure 9 du nez de l'assise 3 et l'autre extrémité du cylindre 12 est fixé sur la structure de support 6 de l'assise 4.

La figure 2 est une vue de dessous qui montre plus particulièrement le dispositif de commande de déverrouillage 2, le nez de l'assise 3 et le vérin simple effet 10 permettant de déplacer le nez de l'assise 3 vers l'avant lorsqu'il est déverrouillé. Le système de déverrouillage est visible de façon schématique sur la figure 3 et sera expliqué plus loin. Le dispositif de commande de déverrouillage 2 comprend une barre rigide 13 et un câble 14 munie d'une gaine plastifiée 15 situé à une distance déterminée telle que, lorsque la paume d'une main d'un utilisateur est en appui sur la barre rigide 13, ses doigts puissent exercer une traction sur le câble 14. La simple traction sur le câble 14 permet de déverrouiller le vérin 10 et de déployer le nez d'assise 3 vers l'avant. Lorsque le nez d'assise 3 est à la position souhaitée par l'utilisateur, celui-ci relâche le câble 14 et le déplacement du nez d'assise 3 est stoppé.

La gaine plastifiée 15 permet uniquement une préhension plus douce et agréable au toucher qu'une préhension directement sur le câble 14.

Comme le montre les figures 2 et 3, on voit que la barre rigide 13 présente une forme en U et comprend, aux extrémités de la barre, deux prolongements 16A-16B sensiblement perpendiculaires à la barre 13.

Sur le prolongement 16A, l'extrémité du câble 14 est fixé solidairement par un moyen approprié, par exemple un collier de serrage, tandis que sur l'autre prolongement 16B, l'ancrage 17 du câble 14 permet de transmettre une traction sur un moyen d'actionnement 18 relié à un robinet 20 de l'embout 19 montée sur l'extrémité du piston 11 du vérin 10. L'embout 19 est également assemblé sur une chappe 21 solidaire de la structure 9 du nez d'assise 3.

L'action de déverrouillage sur le robinet 20 permet le déplacement du nez de l'assise 3, via le vérin 10 au gré de l'utilisateur.

Comme il est plus particulièrement visible sur la figure 3, on voit que les prolongements 16A et 16B se termine par une boucle 16'A et 16'B disposée dans le plan vertical du prolongement 16A et 16B, l'extrémité de la boucle 16'A et 16'B est solidarisée par un moyen approprié sur la structure 9 du nez d'assise 3.

Le fonctionnement du dispositif de déverrouillage d'un nez d'assise 3 est très simple et facile par l'utilisateur. En position inactive, le câble plastifié 15 est tendu entre les prolongements 16A et 16B de la barre rigide 16, comme cela est montré en traits interrompus courts sur la figure 2, lorsque une traction est exercée sur le câble plastifié 15, par la main de l'utilisateur, le câble plastifié 15 se rapproche de la barre rigide 16 et sa tension commande le déverrouillage du nez d'assise 3 via le robinet 20 et le vérin 10 comme le montré sur la figure 2. Le nez d'assise 3 sous l'action du vérin 10 se déploie alors automatiquement vers l'avant suivant le souhait de l'utilisateur. Le relâchement du câble plastifié stoppe le déplacement du nez d'assise 3. Pour remettre le nez dans sa position initial, non déployée, l'utilisateur exerce alors une traction sur le câble 14 avec sa gaine plastique 15 pour déverrouiller le nez d'assise 3 et l'utilisateur avec la paume de la main exerce une poussée manuelle sur la barre rigide 16 afin de déplacer le nez d'assise 3, vers l'arrière dans sa position initiale.

Le dispositif de déverrouillage du nez de l'assise suivant l'invention est un dispositif de commande simple et peu onéreux, il apporte également un gain de pièce, un gain de masse, son ergonomie évite le pincement de la paume de la main et de plus il est agréable au toucher.

Bien entendu, il va de soi que l'invention ne se limite pas à l'exemple de réalisation plus spécialement décrit et représenté en référence aux dessins annexés ; elle en embrasse au contraire toutes les variantes.

## Revendications

**1.** Siège de véhicule (1) automobile comprenant :
• un dossier (5),
• un coussin d'assise (4),
• une structure de nez d'assise (3), pouvant être déployée de façon réversible vers l'avant du coussin d'assise (4) et
• un moyen de commande assurant le déverrouillage du nez d'assise(3),
**caractérisé en ce que** le moyen de commande (2) comprend un moyen d'appui (13) et un élément filaire souple (14) disposés le long l'un de l'autre et espacés l'un de l'autre de manière à ce que, lorsque la paume d'une main d'un utilisateur est en appui sur le moyen d'appui (13), ses doigts puissent exercer une traction sur l'élément filaire souple (14) en le tirant vers le moyen d'appui afin de déverrouiller le nez d'assise (3).

**2.** Siège de véhicule automobile selon la revendication 1, **caractérisé en ce que** le siège comprend un moyen de déplacement (10) apte à déployer automatiquement le nez d'assise (3) dès que celui-ci est déverrouillé.

**3.** Siège de véhicule automobile selon la revendication 2, **caractérisé en ce que** le moyen de déplacement est un vérin à simple effet (10).

**4.** Siège de véhicule automobile selon l'une quelconque des revendications précédentes, **caractérisé en ce que** le moyen d'appui (13) comprend une barre (16).

**5.** Siège de véhicule automobile selon la revendication 4 et selon l'une des revendications 2 à 3, **caractérisé en ce que** le moyen d'appui(13) présente une forme en U et comprend, aux extrémités de la barre, deux prolongements (16A)(16B) sensiblement perpendiculaires à la barre (16) et **en ce que** l'une des extrémités de l'élément filaire (14) est fixée solidairement à un des prolongements et l'autre extrémité de l'élément filaire est reliée au moyen de déplacement (10).

**6.** Siège de véhicule automobile selon l'une quelconque des revendications précédentes, **caractérisé en ce que** l'élément filaire souple est un câble (14).

**7.** Siège de véhicule automobile selon la revendication 6, **caractérisé en ce que** le câble (14) est constitué de fils torsadés ou tressés.

**8.** Siège de véhicule automobile selon l'une quelconque des revendications précédentes, **caractérisé en ce que** l'élément filaire souple (14) est recouvert d'une gaine plastifiée (15).

**9.** Siège de véhicule automobile selon l'une quelconque des revendications précédentes, **caractérisé en ce que** l'élément filaire souple (14) est tendu lorsqu'il n'est pas actionné.

**10.** Siège de véhicule automobile selon l'une quelconque des revendications précédentes, **caractérisé en ce que** le nez d'assise (3) est escamotable par une poussée manuelle sur le moyen d'appui (13) vers l'arrière du siège, après déverrouillage du moyen de déplacement.

**12.** Siège de véhicule automobile selon la revendication 10 **caractérisé en ce que** le moyen et d'appui (2) et l'élément filaire (14) sont disposés sous la structure de nez de cousin mobile (3), le moyen d'appui (13) étant disposé plus vers l'avant du siège que l'élément filaire (14).
